# EUROPEAN PATENT APPLICATION

(11) **EP 3 324 294 A1**
(43) Date of publication of application: **23.05.2018**
(21) Application number: 17199493.2
(22) Date of filing: 01.11.2017
(51) Int. Cl.: G06F 9/54, G06Q 10/10, H04L 12/58

(54) **PROVIDING NOTIFICATIONS VIA A PLATFORM**

(30) Priority: 21.11.2016 US 201615357750
(71) Applicant: Hewlett Packard Enterprise Development LP, Houston, TX 77070 (US)
(72) Inventor: MOREAU, Thomas, 06254 Cedex Mougins (FR); DIAS VAZ, Jean Michael, 06254 Cedex Mougins (FR); CRISTIN, Clement, 06254 Cedex Mougins (FR)
(74) Representative: ZBM Patents - Zea, Barlocci & Markvardsen

(57) **Abstract**

Examples disclosed herein relate to providing notifications via a platform. The examples enable managing, by a physical processor that implements machine readable instructions, a set of security policies for the platform; applying the set of security policies to a set of applications interfaced with the platform for a user of the platform; providing, by the physical processor, a first notification via the platform based on a determination that a first application interfaced with the platform should provide the first notification to a user of the platform; and providing, by the physical processor, a second notification via the platform based on a determination that a second application interfaced with the platform should provide the second notification to the user of the platform.

## Description

### BACKGROUND

A server (or set of servers) may facilitate the integration of multiple heterogeneous domains via a single platform that may run on any device. The platform may interface with multiple heterogeneous applications via the multiple heterogeneous domains.

### BRIEF DESCRIPTION OF THE DRAWINGS

The following detailed description references the drawings, wherein:
FIG. 1 is a block diagram depicting an example system for providing notifications via a platform.
FIG. 2 is a block diagram depicting an example system for providing notifications via a platform.
FIG. 3 is a block diagram depicting an example system for providing notifications via a platform.
FIG. 4 is a block diagram depicting an example system for providing notifications via a platform.
FIG. 5 is a block diagram depicting an example system for providing notifications via a platform.
FIG. 6 is a flow diagram depicting an example method for providing notifications via a platform.
FIG. 6A is a flow diagram depicting an example method for providing notifications via a platform.

### DETAILED DESCRIPTION

The following detailed description refers to the accompanying drawings. Wherever possible, the same reference numbers are used in the drawings and the following description to refer to the same or similar parts. It is to be expressly understood, however, that the drawings are for the purpose of illustration and description only. While several examples are described in this document, modifications, adaptations, and other implementations are possible. Accordingly, the following detailed description does not limit the disclosed examples. Instead, the proper scope of the disclosed examples may be defined by the appended claims.

The terminology used herein is for the purpose of describing particular embodiments only and is not intended to be limiting. As used herein, the singular forms "a," "an," and "the" are intended to include the plural forms as well, unless the context clearly indicates otherwise. The term "plurality," as used herein, is defined as two, or more than two. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system. The term "and/or" as used herein refers to and encompasses any and all possible combinations of one or more of the associated listed items. It will also be understood that, although the terms first, second, third, etc. may be used herein to describe various elements, these elements should not be limited by these terms, as these terms are only used to distinguish one element from another unless stated otherwise or the context indicates otherwise. As used herein, the term "includes" means includes but not limited to, the term "including" means including but not limited to. The term "based on" means based at least in part on.

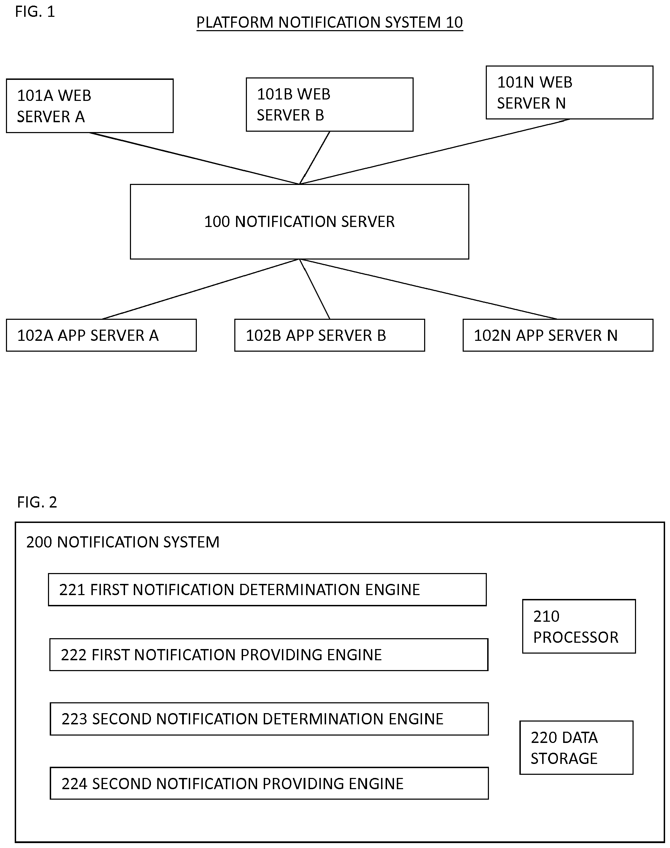

The foregoing disclosure describes a number of example implementations for providing notifications via a platform. The disclosed examples may include systems, devices, computer-readable storage media, and methods for providing notifications via a platform. For purposes of explanation, certain examples are described with reference to the components illustrated in FIGS. 1-6A. The functionality of the illustrated components may overlap, however, and may be present in a fewer or greater number of elements and components.

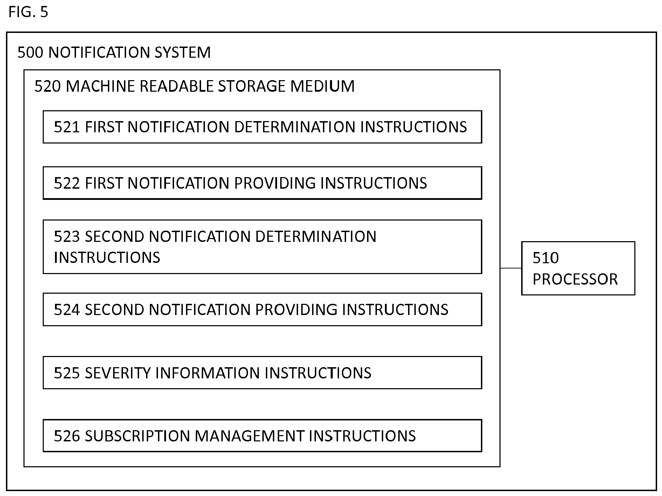

Further, all or part of the functionality of illustrated elements may co-exist or be distributed among several geographically dispersed locations. Moreover, the disclosed examples may be implemented in various environments and are not limited to the illustrated examples. Further, the sequence of operations described in connection with FIG. 5 are examples and are not intended to be limiting. Additional or fewer operations or combinations of operations may be used or may vary without departing from the scope of the disclosed examples. Furthermore, implementations consistent with the disclosed examples need not perform the sequence of operations in any particular order. Thus, the present disclosure merely sets forth possible examples of implementations, and many variations and modifications may be made to the described examples. All such modifications and variations are intended to be included within the scope of this disclosure and protected by the following claims.

A server (or set of servers) may facilitate the integration of multiple heterogeneous domains via a single platform that may run on any device. The platform may interface with multiple heterogeneous applications via the multiple heterogeneous domains. Each of these multiple heterogeneous applications may provide notifications to an end user of the corresponding application. The notification provided by an application may be customized by that application, with a format, definition, and configuration specific to that application. As such, a user may be inundated with notifications from each application that they interact with, where each application provides different information in different formats and for different purposes. A platform intended to simplify a user's access and use of multiple heterogeneous applications may instead bombard a user with disparate, confusing, and potentially overwhelming notifications from those multiple heterogeneous applications. Further, each notification may be pushed to the user solely based on the corresponding application's determination that the user should receive the notification..

Examples discussed herein address these technical issues by determining, based on a set of security policies of the platform, that a first application interfaced with the platform should provide a first notification to a user of the platform. The first notification may be provided in a first format via the platform. A determination may also be made, based on the set of security policies of the platform, that a second application interfaced with the platform should provide a second notification to the user of the platform; and the second notification may be provided in a second format different from the first format via the platform.

Another example that addresses these technical issues involves managing a set of security policies for a platform and applying the set of security policies to a set of applications interfaced with the platform. A first notification may be provided via the platform based on a determination that a first application interfaced with the platform should provide the first notification to a user of the platform. A second notification may be provided via the platform based on a determination that a second application interfaced with the platform should provide the second notification to the user of the platform.

This technical solution may facilitate a system that determines which notifications may be provided to the user via the platform from the multiple heterogeneous applications interfaced with the platform. As such, the system may also provide notifications in a consistent format, may facilitate interaction with the platform or prompt user action as a part of the notification, and/or may otherwise add value for the user through the notification process.

FIG. 1 is an example platform notification system 10 in which various examples may be implemented as a platform notification system 10. In particular, FIG. 1 depicts an example of an architecture for an example platform notification system. In some examples, platform notification system 10 may include a notification server 100, a set of web servers 101A, 101B, ..., 101N, a set of application servers 102A, 102B, ..., 102N, and/or other components. In some examples, each component may perform the functionality described herein and may have communication to other devices. For example, the components may include a laptop computing device, a desktop computing device, an all-in-one computing device, a tablet computing device, a mobile phone, an electronic book reader, a web server, a cloud server, a mainframe, and/or other electronic device suitable for providing notifications via a platform.

According to various implementations, platform notification system 10 and the various components described herein may be implemented in hardware and/or a combination of hardware and programming that configures hardware. Furthermore, in FIG. 1 and other Figures described herein, different numbers of components or entities than depicted may be used. In some examples, platform notification system 10 may comprise a set of devices that facilitate providing notifications via a platform. In particular, platform notification system 10 may facilitate provisions of notifications from heterogeneous applications to a user. To that end, as described above, platform notification system 10 may comprise a notification server 100, a set of web servers 101A, 101B, ..., 101N, a set of application servers 102A, 102B, ..., 102N, and/or other components.

The notification server 100 may comprise a server that facilitates provision of notifications from various heterogeneous applications that are hosted by app servers 102A, 102B, ..., 102N to web servers 101A, 101B, ..., 101N that are accessed by end users. Further details regarding the provision of notifications may be provided below with respect to FIGS. 2-6A. In some examples, notification server 100 may also facilitate the integration of multiple heterogeneous domains (e.g., app servers 102A, 102B, ..., 102N) by acting as a unique and secure portal that provides information to the web servers 101A, 101B, ..., 101N.

The web servers 101A, 101B, ..., 101N may provide a client user interface for a set of applications hosted on the multiple heterogeneous domains (e.g., app servers 102A, 102B, ..., 102N). In some examples, a web server 101N may provide a client user interface for a particular user by generating a dashboard through which the user may access the set of applications and by managing the use experience of the user through that dashboard. The web server 101N may interface with the notification server 100, which may, in turn, interface with application servers 102A, 102B, ..., 102B. The application servers 102A, 102B, ..., 102N may each provide the back-end processing and hosting of a corresponding application.

In some examples, the platform notification system 10 may have an architecture similar to or the same as the architecture described in co-pending European Patent Application No. 14306728.8, filed Oct. 29, 2014, incorporated herein by reference in its entirety. In some examples, platform notification system 10 may perform functionality in addition to the functionality described in co-pending European Patent Application No. 14306728.8.

The notification server 100 may comprise, for example, a dedicated server for each of the web servers 101A, 101B, ..., 101N. The notification server 100 may provide a unified façade for the web servers 101A, 101B, ..., 101N with a set of APIs and features for each web server 101A, 101B, ..., 101N. As such, the notification server 100 may hide the complexity and heterogeneous environment of the application servers 102A, 102B, ..., 102N. The notification server 100 may also provide common service features for the web servers 101A, 102A, ..., 102N and the application servers 102A, 102B, ..., 102N. These common service features may comprise, for example, security, authentication, logging, auditing, dashboard management, and/or other service features. The notification server 100 may also support plugins that facilitate interaction with the corresponding application servers 102A, 102B, ... 102N. Each plugin supported by the notification server 100 may facilitate a gateway between an application hosted by an application server 102N and the application server itself 102N.

In some examples, a plugin supported by the notification server may expose a set of APIs that facilitate the use of value packs by the notification server. A value pack may comprise, for example, a predefined content pack for services and/or network technologies that provide features related to an application hosted on an application server 101N. For example, each value pack may be related to a specific application and a specific application server 101N, but may be used for each web server 101A, 101B, ..., 101N that corresponds to a user that has access to that application.

In these examples, the notification server 100 may detect and access a value pack to generate data that is made available for a web server 101N, which may then generate a dashboard based on that data. Based on the value pack, the web server 101N may generate a dashboard that comprises a set of workspaces, views, layouts, and/or other components for a user. The value pack may also comprise information about security for the application. For example, the value pack may comprise information about a set of roles and access information related to each of those roles. The notification server 100 may use the information about the set of roles to determine what information may be accessed by and/or provided to a web server 101 N and a particular user of that web server 101 N.

In addition to helping facilitate management and generation of dashboards, the notification server 100 may also facilitate provision of notifications from the heterogeneous application servers 102A, 102B, ..., 102N to the web servers 101A, 101B, ..., 101N for display to the user. A notification may comprise, for example, a message, alert, warning, error, prompt for action, and/or other set of data that may be displayed to a user in real time via the user interface provided by a web server 101N. The notification server 100 may generate a notification based on information received from an application server 102N and/or based on information from a corresponding value pack for that application server 102N.

Each notification may have a unique notification composite key, metadata, the set of data to be displayed to the user, and/or other information related to the notification. The notification composite key may comprise, for example, a set of identification data unique to the notification and may be used by the notification platform system 10 to identify and/or reference a notification. For example, a notification composite key may comprise origin information, domain information, value pack information, an identifier, type, workspace information, and/or other identification information. The origin information may comprise information about the origin of the notification (e.g, a plugin, an application server, a workspace, a client, etc.). The domain information may comprise information about which plugin/corresponding application server associated with the notification. The value pack information may comprise information and/or an identifier of a value pack associated with the notification. The identifier may be any unique n-bit number, where n is a positive integer specified by the platform notification system 10. The type may comprise a type of the notification. The workspace information may comprise information and/or an identifier of a workspace associated with the notification. In some examples, origin information, and an identifier may be minimal, mandatory properties of the notification composite key, while other properties may be optional or context specific

In some examples, each application server 102A, 102B, ..., 102N may send information about a set of available notifications to the notification server 100 (e.g., via a plugin or via the value pack) for users of its corresponding application. The information about the set of notifications may include origin information, value pack information, title, progress information, and/or other information related to a notification.

The notification server 100 may use the information about the set of available notifications from each application server 102A, 102B, ..., 102N and value pack metadata to build and/or manage a notification registry. The notification registry may comprise all notifications that can be provided by the application servers 102A, 102B, ..., 102N. The notification server 100 may also manage, for each application and corresponding value pack, a subscription list of users that are subscribed to its notifications and may determine, based on the subscription list, the list of users subscribed to its notifications.

In some examples, the notification server 100 may comprise a notification registry that comprises information about each notification that can be defined by a value pack and made available to a user via a web server 101A, 101B, ..., 101N. The notification server 100 may determine the notifications to be provided to the user based on the list of users, the notification registry, and the information in the value packs associated with the application servers 102A, 102B, ..., 102N that are providing the lists of users and notification registries. Responsive to the notification server 100 determining that a notification is to be provided to the user based on the list of users, the notification registry, and the information in the value packs, the notification server may also determine whether the user should receive the notification based on roles, workspaces, views, and/or other components associated with the user.

In some examples, a notification may comprise a definition that may comprise information that may be used by a web server 101N to display the notification. The notification server 100 may manage notification definitions that are supported by the web servers 101A, 101B, .... 101N. The notification server 100 may access a notification definition from a value pack, plugin, application server 101N, web server 101A, and/or other component. In some examples, a notification may be defined in a value pack and accessed by the notification platform system 10 and the notification server 100 in particular.

A notification definition may comprise a set of properties that a web server 101N may use to determine how to present the notification to the user via its user interface. The set of properties include, but are not limited to, roles, severity level, progress, keywords, actions, icon, title, description, display information, sound, and/or other properties.

The roles may comprise a subset of roles used in a value pack for controlling access to information and may be used by the security service feature of the notification server 100 to securely control and restrict access to information and/or a notification by a user.

A severity level may comprise information about a severity level of the notification. The severity levels may be specific to an application and a value pack. Examples of a set of severity levels include fatal, danger, error, warning, information, success, trace, default, and/or other levels. The notification server 100 and/or the web server 101N may use the level information determine how to display a notification to the user. For example, the web server 101N may display a notification with a severity level of danger or fatal in a much different manner than a notification with a severity level of default or information.

Progress information may comprise information about whether a notification replaces a previous notification with the same composite key. Progress information may be convenient for the notification server 100 and/or the web server 101N to use if the same notification may be sent multiple times (e.g., as a progress status).

Keywords may be used to ease searching of notifications and may comprise a regular string data object.

Actions may comprise information about a set of actions for a user on receipt of the notification. Each action may be associated with an action type (e.g, mandatory, recommended, suggested, etc.) that may provide additional context to the user to guide action by the user in response to the user receiving the notification. Examples of actions include, but are not limited to, navigation to a view, a request to change data, a request to validate data, an internal action, an operation to be performed on an application server 102N, and/or other actions.

The icon may comprise an icon for the web server 101N to display with the display of the notification and may comprise an image file object.

The title may be the title of the notification and may be provided with the notification to the user via the web server 101N.

The description may comprise information about the notification. In some examples, description may comprise context about why the notification is provided, may comprise the content of the notification to be provided to the user via the web server 101N, and/or may comprise other information about the notification.

Display information may comprise information about how the web server 101N is to display the notification to the user (e.g., as a toast, within a modal window, as a popup, within a workspace, and/or by other manners facilitated by the web server 101N.

Sound information may comprise information about a sound to play on notification receipt.

With the notification definition and the architecture set forth in FIG. 1, the notification server 100 may facilitate provision of real-time notifications of a similar or same format from heterogeneous applications to a user. The notification server 100 may facilitate provision of tailored or automatic messages based on a user role, user associations with workspaces, views, groups, subscription lists, and/or other user characteristics as well.

FIG. 2 depicts an example platform notification system 200. In some examples, the platform notification system 200 may reside in the example architecture depicted in FIG. 1, or may reside in a different system architecture. In any example, platform notification system 100 may interface with a set of heterogeneous servers and a set of web servers that are accessible to a set of heterogeneous users. The set of heterogeneous servers may host a corresponding set of heterogeneous applications. Each of the set of web servers may provide a single user interface via which a user may access the set of heterogeneous applications. To that end, the platform notification system 100 may comprise a set of application interfaces that communicate via a corresponding set of application packages to the corresponding set of applications running on the set of heterogeneous servers. The platform notification system 100 may also communicate with the web servers via the corresponding set of application packages.

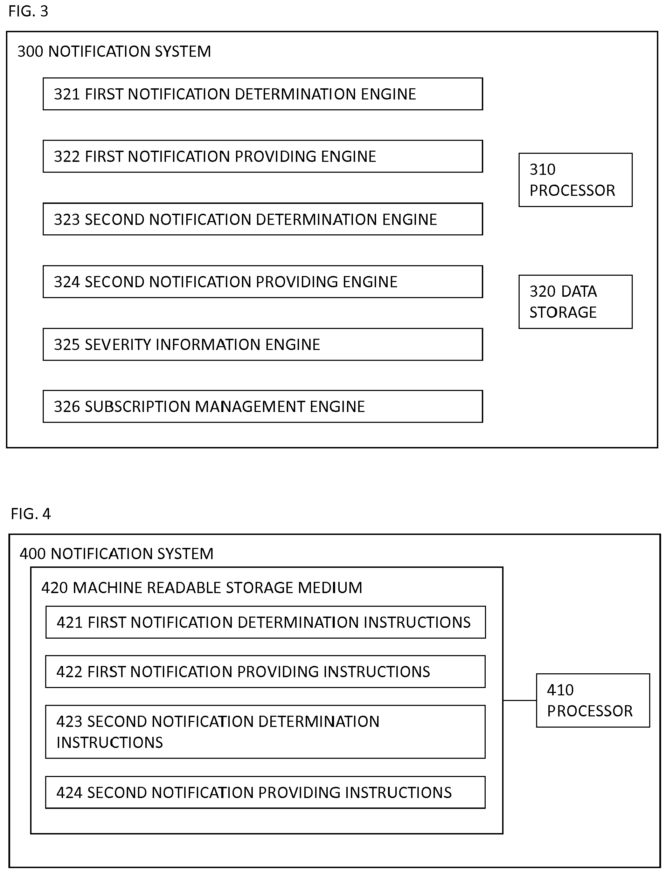

In some examples, platform notification system 200 may comprise a processor 210, a first notification determination engine 221, a first notification providing engine 222, a second notification determination engine 223, a second notification providing engine 224, and/or other engines. The term "engine", as used herein, refers to a combination of hardware and programming that performs a designated function. As is illustrated with respect to FIGS. 4-5, the hardware of each engine, for example, may include one or both of a physical processor and a machine-readable storage medium, while the programming is instructions or code stored on the machine-readable storage medium and executable by the processor to perform the designated function.

In performing their respective functions, engines 221-224 may access data storage 220 and/or other suitable database(s). Data storage 220 may represent any memory accessible to platform notification system 200 that can be used to store and retrieve data. Data storage 220 and/or other databases communicably coupled to platform notification system 200 may comprise random access memory (RAM), read-only memory (ROM), electrically-erasable programmable read-only memory (EEPROM), cache memory, floppy disks, hard disks, optical disks, tapes, solid state drives, flash drives, portable compact disks, and/or other storage media for storing computer-executable instructions and/or data. Platform notification system 200 may access data storage 220 locally or remotely via a network.

Data storage 220 may include a database to organize and store data. The database may reside in a single or multiple physical device(s) and in a single or multiple physical location(s). The database may store a plurality of types of data and/or files and associated data or file description, administrative information, or any other data.

First notification determination engine 221 may determine based on a set of security policies of the platform, that a first application interfaced with the platform should provide a first notification to a user of the platform. The first notification may comprise a definition, composite key, content, and/or other information similar to the notifications described above with respect to FIG. 1. In some examples, the content of the notification may comprise a prompt for action in the first application, which may be completed via the platform.

In some examples, the first notification determination engine 221 may manage a subscription list of notifications for the user based on a subset of application packages associated with the platform for the user. In some examples, the first notification determination engine 221 may manage the subscription list for the user based on a set of associated workspaces, views, and/or other components of a dashboard of the user interface that is associated with the user. In these examples, heterogeneous servers and/or the platform notification system 100 may store the subscription lists. In examples in which the heterogeneous servers store subscription lists, the platform notification system 100 may receive information about the lists and may manage the subscription lists to ensure that the appropriate notifications are provided to the appropriate users.

In some examples, the first notification determination engine 221 may manage the set of security policies for the platform. The set of security policies may be consistent across each application interfaced via the platform. The first notification determination engine 221 may apply the set of security policies to each of the set of applications interfaced with the platform for the user of the platform. In some examples, the first notification determination engine 221 may determine that the first notification should be provided to the user by determining that the notification includes information about a set of roles and that, based on applying the set of security policies, the user associated with a first role of the set of roles.

The first notification providing engine 222 may provide the first notification in a first format via the platform. The first notification providing engine 222 provide the first notification via the platform by causing the platform to display the first notification. In some examples, the first notification providing engine 222 may determine the first format based on information included in the first notification.

In some examples, the first notification providing engine 222 may determine that the first notification includes severity information about a first severity level associated with the first notification. The first notification providing engine 222 may provide the first notification to the user based on the first severity level associated with the first notification. For example, responsive to the first severity level comprising a level indicating some sort of security risk or major error, the first notification providing engine 222 may cause the notification to be displayed to the user in a more prominent or disruptive manner than if the first severity level comprised a level indicating success related to a requested action or a default notification.

In some examples, the second notification determination engine 223 may determine based on a set of security policies of the platform, that a second application interfaced with the platform should provide a second notification to a user of the platform. The second notification may comprise a definition, composite key, content, and/or other information similar to the notifications described above with respect to FIG. 1. In some examples, the content of the notification may comprise a prompt for action in the second application, which may be completed via the platform. In some examples, the second notification determination engine 223 may perform functionality the same as or similar to the first notification determination engine 221, but as an interface and for the second application.

Second notification providing engine 224 may provide the second notification in a second format via the platform, where the second format is different from the first format. In some examples, the second notification providing engine 224 determines the first format based on information included in the second notification. In some examples, the second notification providing engine 224 may perform functionality the same as or similar to the first notification providing engine 224, but as an interface and for the second application.

In some examples, the subscription lists, available notifications, and/or other content may be stored in the data storage 120, may be stored in another storage communicably coupled to system 100, may be obtained by the system from the heterogeneous servers, may be received from an administrator of system 100, and/or may be otherwise accessed. In some examples, each heterogeneous server may have its own corresponding subscription list and list of available notifications that are stored.

FIG. 3 is a block diagram depicting an example platform notification system 300. Platform notification system 300 may comprise a processor 310, first notification determination engine 321, a first notification providing engine 322, a second notification determination engine 323, a second notification providing engine 324, a severity information engine 325, a subscription management engine 326, and/or other engines. Severity information engine 325 performs the severity information functionality related to severity levels in the notifications, as performed by first notification providing engine 222 and second notification providing engine 222 as described above. Subscription management engine 326 performs the subscription management functionality performed by first notification determination engine 221 and second notification determination engine 223 as described above. Engines 321-326 represent and perform the functionality described above with respect to engines 221-224.

FIG. 4 is a block diagram depicting an example machine-readable storage medium 420 comprising instructions executable by a processor 410 for determining platform notification.

In the foregoing discussion, engines 221-224 were described as combinations of hardware and programming. Engines 221-224 may be implemented in a number of fashions. Referring to FIG. 4, the programming may include processor executable instructions 421-424 stored on a machine-readable storage medium 320 and the hardware may include a processor 410 for executing those instructions. Thus, machine-readable storage medium 420 can be said to store program instructions or code that when executed by processor 410 implements platform notification system 200 of FIG. 2.

In FIG. 4, the executable program instructions in machine-readable storage medium 420 are depicted as first notification determination instructions 421, first notification providing instructions 422, second notification determination instructions 423, and second notification providing instructions 424. Instructions 421-324 represent program instructions that, when executed, cause processor 410 to implement engines 221-224, respectively.

FIG. 5 is a block diagram depicting an example machine-readable storage medium 520 comprising instructions executable by a processor 510 for determining platform notification.

In the foregoing discussion, engines 321-326 were described as combinations of hardware and programming. Engines 321-326 may be implemented in a number of fashions. Referring to FIG. 5, the programming may be processor executable instructions 521-526 stored on a machine-readable storage medium 420 and the hardware may include a processor 510 for executing those instructions. Thus, machine-readable storage medium 520 can be said to store program instructions or code that when executed by processor 510 implements platform notification system 300 of FIG. 3.

In FIG. 5, the executable program instructions in machine-readable storage medium 520 are depicted as first notification determination instructions 521, first notification providing instructions 522, second notification determination instructions 523, second notification providing instructions 524, severity information instructions 525, subscription management instructions 526, and/or other instructions. Instructions 521-525 represent program instructions that, when executed, cause processor 510 to implement engines 321-326, respectively.

Machine-readable storage medium 420 (or machine-readable storage medium 520) may be any electronic, magnetic, optical, or other physical storage device that contains or stores executable instructions. In some implementations, machine-readable storage medium 420 (or machine-readable storage medium 520) may be a non-transitory storage medium, where the term "non-transitory" does not encompass transitory propagating signals. Machine-readable storage medium 420 (or machine-readable storage medium 520) may be implemented in a single device or distributed across devices. Likewise, processor 410 (or processor 510) may represent any number of processors capable of executing instructions stored by machine-readable storage medium 420 (or machine-readable storage medium 520). Processor 410 (or processor 510) may be integrated in a single device or distributed across devices. Further, machine-readable storage medium 420 (or machine-readable storage medium 520) may be fully or partially integrated in the same device as processor 410 (or processor 510), or it may be separate but accessible to that device and processor 410 (or processor 510).

In one example, the program instructions may be part of an installation package that when installed can be executed by processor 410 (or processor 510) to implement platform notification system 200. In this case, machine-readable storage medium 420 (or machine-readable storage medium 520) may be a portable medium such as a floppy disk, CD, DVD, or flash drive or a memory maintained by a server from which the installation package can be downloaded and installed. In another example, the program instructions may be part of an application or applications already installed. Here, machine-readable storage medium 420 (or machine-readable storage medium 520) may include a hard disk, optical disk, tapes, solid state drives, RAM, ROM, EEPROM, or the like.

Processor 410 may be at least one central processing unit (CPU), microprocessor, and/or other hardware device suitable for retrieval and execution of instructions stored in machine-readable storage medium 420. Processor 410 may fetch, decode, and execute program instructions 421-424, and/or other instructions. As an alternative or in addition to retrieving and executing instructions, processor 410 may include at least one electronic circuit comprising a number of electronic components for performing the functionality of at least one of instructions 421-424, and/or other instructions.

Processor 510 may be at least one central processing unit (CPU), microprocessor, and/or other hardware device suitable for retrieval and execution of instructions stored in machine-readable storage medium 520. Processor 510 may fetch, decode, and execute program instructions 521-526, and/or other instructions. As an alternative or in addition to retrieving and executing instructions, processor 510 may include at least one electronic circuit comprising a number of electronic components for performing the functionality of at least one of instructions 521-526, and/or other instructions.

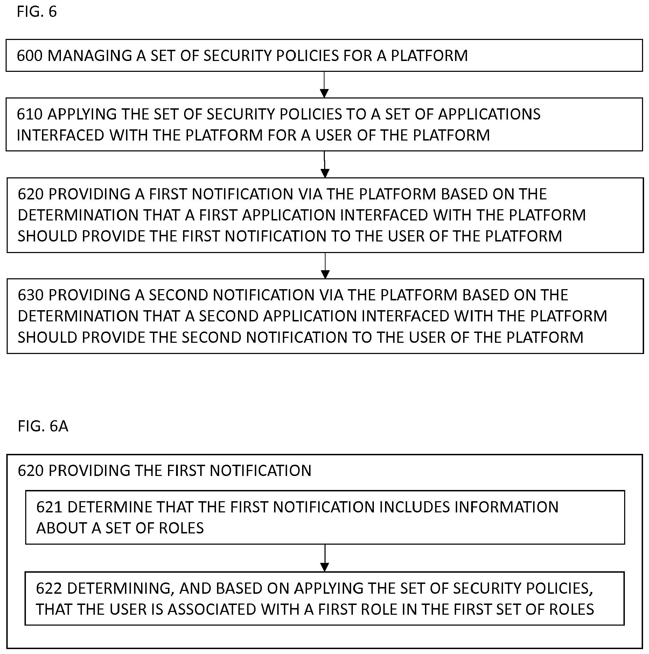

FIG. 6 is a flow diagram depicting an example method for determining platform notification. The various processing blocks and/or data flows depicted in FIGS. 6 and 6A are described in greater detail herein. The described processing blocks may be accomplished using some or all of the system components described in detail above and, in some implementations, various processing blocks may be performed in different sequences and various processing blocks may be omitted. Additional processing blocks may be performed along with some or all of the processing blocks shown in the depicted flow diagrams. Some processing blocks may be performed simultaneously. Accordingly, the method of FIG. 6 as illustrated (and described in greater detail below) is meant be an example and, as such, should not be viewed as limiting. The methods of FIG. 6 and 6A may be implemented in the form of executable instructions stored on a machine-readable storage medium, such as storage medium 420, storage medium 520, and/or in the form of electronic circuitry.

In an operation 600, a set of security policies may be managed for the platform. For example, the system 200 (and/or the first notification determination engine 221, the first notification determination instructions 421, or other resource of the system 200) may manage the set of security policies for the platform. The system 200 may manage the set of security policies for the platform in a manner similar or the same as that described above in relation to the execution of the first notification determination engine 221, the first notification determination instructions 421, and/or other resource of the system 200.

In an operation 610, a set of security policies may be applied to the set of applications interfaced with the platform for a user of the platform. For example, the system 200 (and/or the first notification determination engine 221, the first notification determination instructions 421, or other resource of the system 200) may apply the set of security policies to the set of applications interfaced with the platform. The system 200 may apply the set of security policies to the set of applications interfaced with the platform in a manner similar or the same as that described above in relation to the execution of the first notification determination engine 221, the first notification determination instructions 421, and/or other resource of the system 200.

In an operation 620, a first notification may be provided via the platform based on a determination that a first application interfaced with the platform should provide the first notification to a user of the platform. For example, the system 200 (and/or the first notification providing engine 222, the first notification providing instructions 432, or other resource of the system 200) may provide the first notification via the platform. The system 200 may provide the first notification via the platform in a manner similar or the same as that described above in relation to the execution of the first notification providing engine 222, the first notification providing instructions 422, and/or other resource of the system 200.

In some examples, the first notification may be provided via the platform in various manners.

In an operation 620, a determination may be made that the first notification includes information about a first set of roles. For example, the system 200 (and/or the first notification determination engine 221, the first notification providing engine 222, the first notification determination instructions 431, the first notification providing instructions 432, or other resource of the system 200) may determine that the first notification includes information about the first set of roles. The system 200 may determine that the first notification includes information about the first set of roles in a manner similar or the same as that described above in relation to the execution of the first notification determination engine 221, the first notification providing engine 222, the first notification determination instructions 431, the first notification providing instructions 432, and/or other resource of the system 200.

In an operation 622, a determination may be made, based on applying the set of security policies, that the user is associated with a first role in the first set of roles. For example, the system 200 (and/or the first notification determination engine 221, the first notification providing engine 222, the first notification determination instructions 431, the first notification providing instructions 432, or other resource of the system 200) may determine the user is associated with the first role. The system 200 may determine the user is associated with the first role in a manner similar or the same as that described above in relation to the execution of the first notification determination engine 221, the first notification providing engine 222, the first notification determination instructions 431, the first notification providing instructions 432, and/or other resource of the system 200.

Returning to FIG. 6, in an operation 630, a second notification may be provided via the platform based on a determination that a second application interfaced with the platform should provide the second notification to the user of the platform. For example, the system 200 (and/or the second notification providing engine 224, the second notification providing instructions 424, or other resource of the system 200) may provide the second notification via the platform. The system 200 may provide the second notification via the platform in a manner similar or the same as that described above in relation to the execution of the second notification providing engine 224, the second notification providing instructions 424, and/or other resource of the system 200.

The foregoing disclosure describes a number of example implementations for providing notifications via a platform. The disclosed examples may include systems, devices, computer-readable storage media, and methods for providing notifications via a platform. For purposes of explanation, certain examples are described with reference to the components illustrated in FIGS. 1-6A. The functionality of the illustrated components may overlap, however, and may be present in a fewer or greater number of elements and components.

Further, all or part of the functionality of illustrated elements may co-exist or be distributed among several geographically dispersed locations. Moreover, the disclosed examples may be implemented in various environments and are not limited to the illustrated examples. Further, the sequence of operations described in connection with FIGS. 6 and 6A are examples and are not intended to be limiting. Additional or fewer operations or combinations of operations may be used or may vary without departing from the scope of the disclosed examples. Furthermore, implementations consistent with the disclosed examples need not perform the sequence of operations in any particular order.

Thus, the present disclosure merely sets forth possible examples of implementations, and many variations and modifications may be made to the described examples. All such modifications and variations are intended to be included within the scope of this disclosure and protected by the following claims.

## Claims

1. A method for providing notifications via a platform, the method comprising:
managing, by a physical processor that implements machine readable instructions, a set of security policies for the platform;
applying the set of security policies to a set of applications interfaced with the platform for a user of the platform;
providing, by the physical processor, a first notification via the platform based on a determination that a first application interfaced with the platform should provide the first notification to a user of the platform; and
providing, by the physical processor, a second notification via the platform based on a determination that a second application interfaced with the platform should provide the second notification to the user of the platform.

2. The method of claim 1, wherein providing the first notification comprises:
determining, by the physical processor, that the first notification includes information about a first set of roles; and
determining, by the physical processor, and based on applying the set of security policies, that the user is associated with a first role in the first set of roles.

3. The method of claim 1, further comprising:
determining, by the physical processor, that the first notification includes severity information about a first severity level associated with the first notification; and
providing, by the physical processor, the first notification to the user based on the first severity level associated with the first notification.

4. The method of claim 1, further comprising:
providing, by the physical processor, the first notification in a first format via the platform; and
providing, by the physical processor, the second notification in a second format different from the first format via the platform.

5. The method of claim 1, wherein the first notification includes a prompt for user action related to the first application.

6. The method of claim 1, wherein the first notification includes a first composite key, the first composite key including a first set of information related to the first notification, and the second notification includes a second composite key, the second composite key including a second set of information related to the second notification, wherein the first composite key and the second composite key share a same format.

7. A non-transitory machine-readable storage medium comprising instructions executable by a processor of a computing device for providing notifications via a platform, the machine-readable storage medium comprising:
instructions to determine, based on a set of security policies of the platform, that a first application interfaced with the platform should provide a first notification to a user of the platform;
instructions to provide the first notification in a first format via the platform;
instructions to determine, based on the set of security policies of the platform, that a second application interfaced with the platform should provide a second notification to the user of the platform; and
instructions to provide the second notification in a second format different from the first format via the platform.

8. The non-transitory machine-readable storage medium of claim 7, wherein the instructions further comprise:
instructions to determine that the first notification includes severity information about a first severity level associated with the first notification; and
instructions to provide the first notification to the user based on the first severity level associated with the first notification.

9. The non-transitory machine-readable storage medium of claim 7, wherein the platform includes a set of application interfaces to the corresponding set of applications via a corresponding set of application packages, and wherein the instructions further comprise:
instructions to manage a subscription list of notifications for the user based on a subset of application packages associated with the platform for the user.

10. The non-transitory machine-readable storage medium of claim 7, wherein the instructions further comprise:
instructions to manage a subscription list for the user based on a set of associated views of the user in the platform.

11. A system for providing notifications via a platform comprising:
a hardware processor that causes the system to:
manage a set of security policies that apply to a set of applications interfaced with the platform for a user of the platform;
determine, based on a set of security policies of the platform, that a first application interfaced with the platform should provide a first notification to a user of the platform;
provide the first notification in a first format via the platform;
determine, based on the set of security policies of the platform, that a second application interfaced with the platform should provide a second notification to the user of the platform; and
provide the second notification in a second format different from the first format via the platform.

12. The system of claim 11, wherein the hardware processor causes the system to determine that the first application should provide the first notification to the user by:
determining that the first notification includes information about a first set of roles; and
determining, based on applying the set of security policies, that the user is associated with a first role in the first set of roles.

13. The system of claim 11, wherein the hardware processor causes the system to:
determine that the first notification includes severity information about a first severity level associated with the first notification; and
provide the first notification to the user based on the first severity level associated with the first notification.

14. The system of claim 11, wherein the platform includes a set of application interfaces to the corresponding set of applications via a corresponding set of application packages, and wherein the hardware processor causes the system to:
manage a subscription list of notifications for the user based on a subset of application packages associated with the platform for the user.

15. The system of claim 11, wherein the hardware processor causes the system to:
manage a subscription list for the user based on a set of associated views and a set of associated workspaces of the user in the platform.
